# EUROPEAN PATENT APPLICATION

(11) **EP 4 654 308 A1**
(43) Date of publication of application: **26.11.2025**
(21) Application number: 24795484.5
(22) Date of filing: 26.01.2024
(51) Int. Cl.: H01M 10/04, H01M 50/147, H01M 50/30

(54) **BATTERY CELL, BATTERY, ELECTRIC DEVICE, AND METHOD FOR ASSEMBLING BATTERY**

(30) Priority: 28.04.2023 CN 202310482985
(71) Applicant: Contemporary Amperex Technology Co., Limited, Ningde, Fujian 352100 (CN)
(72) Inventor: WU, Kai, Ningde, Fujian 352100 (CN); WU, Yu, Ningde, Fujian 352100 (CN); LIN, Denghua, Ningde, Fujian 352100 (CN); LUO, Yan, Ningde, Fujian 352100 (CN); JIANG, Xiangwei, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Lorenz Seidler Gossel Part. mbB
(86) International application number: PCT/CN2024/074166
(87) International publication number: WO 2024/222095

(57) **Abstract**

Embodiments of this application disclose a battery cell (20), a battery (10), an electric device, and a method for assembling a battery (10). The battery cell (20) is configured for use in a battery (10), the battery cell (20) including: a first wall (201), the first wall (201) being provided with a recess (2012) recessed toward the interior of the battery cell (20), and the recess (2012) being configured to accommodate a first component (12) of the battery (10). By providing a recess (2012) on the first wall (201) that is recessed toward the interior of the battery cell (20), the embodiments of this application can reduce the space occupied by the battery cell (20); and utilizing the recess (2012) to accommodate the first component (12) of the battery (10) enables effective use of space within the battery cell (20) that was previously underutilized, making the structure of each component of the battery (10) more compact, and enhancing the space utilization rate and energy density of the battery (10). The battery cell (20), battery (10), electric device, and method for assembling a battery (10) of the embodiments of this application can enhance battery (10) performance.

## Description

### CROSS-REFERENCE TO RELATED APPLICATIONS

This application claims priority to Chinese Patent Application No. 202310482985.5, filed on April 28, 2023, entitled "BATTERY CELL, BATTERY, ELECTRIC DEVICE, AND METHOD FOR ASSEMBLING BATTERY", which is incorporated herein by reference in its entirety.

### TECHNICAL FIELD

This application pertains to the field of battery technology, and more specifically, to a battery cell, a battery, an electric device, and a method for assembling a battery.

### BACKGROUND

With increasing environmental pollution, the new energy industry has attracted growing attention. For the new energy industry, battery technologies are a significant factor in connection with its development.

The performance of a battery involves consideration of multiple performance parameters. Therefore, improving the performance of a battery is a technical challenge urgently requiring resolution in battery technology.

### SUMMARY

This application provides a battery cell, a battery, an electric device, and a method for assembling a battery, capable of enhancing battery performance.

According to a first aspect, a battery cell is provided, where the battery cell is configured for use in a battery, the battery cell including: a first wall, the first wall being provided with a recess recessed toward the interior of the battery cell, and the recess being configured to accommodate a first component of the battery.

By providing a recess on the first wall that is recessed toward the interior of the battery cell, the volume of the battery cell can be reduced; simultaneously, the number of internal components of the battery cell can be decreased, thereby reducing the structural complexity of the battery cell and the complexity of the assembly process. Utilizing the recess to accommodate the first component of the battery enables a more compact battery structure, enhancing the space utilization rate of the battery.

In some possible implementations of the first aspect, the recess extends through the battery cell along a first direction, the first direction being perpendicular to a thickness direction of the first wall.

By implementing the above configuration, not only the volume of the battery cell be reduced, but also when multiple battery cells are arranged in combination, multiple recesses can be interconnected to form a larger accommodation space, thereby enabling accommodation of larger components in the battery, enhancing the space utilization rate of the battery.

In some possible implementations of the first aspect, a wall adjacent to the first wall and a region of the first wall excluding the recess form a receiving portion protruding toward the exterior of the battery cell; and the receiving portion is configured to accommodate components inside the battery cell.

By utilizing the receiving portion to accommodate components inside the battery cell, the components inside the battery cell can be effectively protected, while making the structure of the battery cell more compact, enhancing the space utilization rate of the battery.

In some possible implementations of the first aspect, the first wall includes at least two recesses, the receiving portion being located between two adjacent recesses of the at least two recesses.

By implementing the above configuration, in cases where the battery cell includes multiple tabs, each tab can be individually protected; additionally, the recesses can be configured to adapt to the shape of the first component, thereby further enhancing the space utilization rate of the battery cell.

In some possible implementations of the first aspect, a connection between a bottom wall of the recess and a sidewall of the recess is provided with a chamfer; and/or a connection between the sidewall of the recess and a wall of the receiving portion away from an electrode assembly is provided with a chamfer.

By implementing the above configuration, the likelihood of stress concentration at the connection can be reduced, thereby improving the reliability of the battery cell, while facilitating the processing and forming of a housing.

In some possible implementations of the first aspect, an angle α formed between the bottom wall of the recess and the sidewall of the recess satisfies a value range of: 100° ≤ α ≤ 150°.

By implementing the above configuration, the demands for saving space and reducing stress concentration can be better balanced.

In some possible implementations of the first aspect, the battery cell includes: an electrode assembly, the electrode assembly including a tab, the tab being at least partially accommodated in the receiving portion.

By accommodating the tab at least partially in the receiving portion, necessary protection can be provided to the tab, while the battery cell can be spared from providing a support member, which would otherwise be used in the absence of the recess to prevent deformation of the housing under external forces, thereby reducing assembly complexity.

In some possible implementations of the first aspect, the receiving portion includes a first receiving portion and a second receiving portion, the electrode assembly including a first tab located in the first receiving portion and a second tab located in the second receiving portion; and the recess is located between the first receiving portion and the second receiving portion.

By implementing the above configuration, the first tab and the second tab can be individually protected, while addressing the demand for saving space occupied by the battery cell.

In some possible implementations of the first aspect, the battery cell further includes: a first insulating structure, the first insulating structure isolates a first end surface of the electrode assembly provided with the tab from the recess, the first insulating structure being located in a region of the first end surface excluding the tab.

By implementing the above configuration, a short circuit between the first end surface of the electrode assembly and the recess can be prevented, improving the reliability of the battery cell.

In some possible implementations of the first aspect, the battery cell further includes an electrode terminal, the electrode terminal being configured to be electrically connected to the tab; and
the electrode terminal is provided on a second wall of the battery cell, the second wall intersecting the first wall; or the electrode terminal is provided on a second wall of the battery cell, the third wall being opposite to the first wall; or the electrode terminal is provided on the receiving portion.

By implementing the above configuration, input or output of electrical energy for the battery cell is facilitated; providing the electrode terminal at different positions of the battery cell can accommodate the demands for outputting electrical energy from different types of battery cells, enabling flexible electrical connections between multiple battery cells; when the electrode terminal is provided on the receiving portion, the distance between the electrode terminal and the tab can be shorter, allowing a smaller size and simpler structure for a connecting member used to connect the electrode terminal and the tab; alternatively, electrical connection with the tab can be achieved without a connecting member, thereby simplifying the structure of the battery cell.

In some possible implementations of the first aspect, the battery cell further includes: a connecting member, the connecting member being configured to connect the tab and the electrode terminal; and the connecting member being at least partially accommodated in the receiving portion.

By implementing the above configuration, electrical connection between the tab and the electrode terminal can be achieved, while further enhancing space utilization rate.

In some possible implementations of the first aspect, the battery cell further includes: a second insulating structure, the second insulating structure isolating the connecting member from a surface of the receiving portion opposite to the connecting member.

By implementing the above configuration, a short circuit between the connecting member and the surface of the receiving portion can be prevented, improving the reliability of the battery cell.

In some possible implementations of the first aspect, the battery cell further includes: a housing, the housing having an opening; and an end cover, the end cover being configured to close the opening; the first wall being a sidewall of the housing adjacent to the opening; or the first wall being the end cover.

By implementing the above configuration, necessary protection can be provided for the electrode assembly; the first wall can be flexibly determined based on the structure of the electrode assembly and the housing, thereby better balancing the demands for saving space and reducing assembly complexity.

In some possible implementations of the first aspect, the end cover includes a wall of the battery cell with a largest area.

By implementing the above configuration, components inside the battery cell can be more easily assembled.

In some possible implementations of the first aspect, the first component includes a thermal management component.

The thermal management component is a significant component in the battery; by implementing the above configuration, accommodating the thermal management component in the recess enhances space utilization rate while enabling effective thermal management of the region where the recess is located.

According to a second aspect, a battery is provided, including: a first component; and a battery cell according to the first aspect or any possible implementation of the first aspect, where the recess is configured to accommodate the first component.

By implementing the above configuration, the volume of the battery cell can be reduced; and utilizing the recess to accommodate the first component of the battery enables a more compact battery structure, enhancing the space utilization rate of the battery.

In some possible implementations of the second aspect, the first component includes a thermal management component, the thermal management component being at least partially accommodated in the recess.

By implementing the above configuration, the space utilization rate can be enhanced while improving the thermal management effect for the region where the recess is located.

In some possible implementations of the second aspect, a dimension of the thermal management component in a first direction is less than or equal to a dimension of the recess in the first direction, the first direction being a depth direction of the recess.

By implementing the above configuration, the thermal management effect for the bottom wall of the recess can be enhanced; when the dimension is less than the dimension of the recess, the remaining space of the recess can accommodate other components, enhancing the space utilization rate of the battery; and when the dimension equals the dimension of the recess, a surface of the thermal management component away from the recess is substantially flush with a surface of the receiving portion away from the recess, facilitating assembly of the thermal management component, the battery cell, and other components.

In some possible implementations of the second aspect, the battery cell includes an electrode assembly, a region of the first wall excluding the recess forming a receiving portion protruding toward the exterior of the battery cell; and the receiving portion is configured to accommodate a tab of the electrode assembly, a surface of the thermal management component away from the recess being flush with a surface of the receiving portion away from the tab.

By implementing the above configuration, space can be effectively saved and assembly complexity reduced; simultaneously, the shorter distance between the thermal management component and the electrode assembly inside the battery cell can enhance the thermal management effect of the thermal management component.

In some possible implementations of the second aspect, the thermal management component includes a main body portion and a protruding portion, the protruding portion protruding from a surface of the main body portion opposite to the first wall toward the first wall, at least a portion of the protruding portion being accommodated in the recess.

By implementing the above configuration, the thermal management component not only has a heat exchange surface opposite to the recess for thermal management of the recess region but also has a heat exchange surface opposite to the receiving portion, enabling more comprehensive thermal management of the first wall, which is beneficial to enhancing battery performance. When the receiving portion is configured to accommodate the tab and/or the connecting member, since the portion of the tab connecting with the connecting member during operation of the electrode assembly has high current-carrying requirements, the protruding portion can provide better thermal management for the portion of the tab connecting with the connecting member.

In some possible implementations of the second aspect, a dimension of the protruding portion in the first direction is greater than or equal to a dimension of the recess in the first direction.

By implementing the above configuration, a wall of the protruding portion opposite to the recess can be in close contact with a bottom wall of the recess, enhancing heat exchange effects; simultaneously, the protruding portion can provide a supporting function, preventing the weight of the thermal management component from acting on the receiving portion and the components accommodated therein, ensuring the reliability of the battery cell.

In some possible implementations of the second aspect, the thermal management component includes at least two protruding portions, the protruding portions being spaced apart from the receiving portion.

By implementing the above configuration, effective thermal management can be provided for the first wall; additionally, multiple protruding portions can provide supporting or balancing functions, enabling the thermal management component to cooperate more stably with the battery cell.

In some possible implementations of the second aspect, the thermal management component abuts the first wall.

By implementing the above configuration, the thermal management effect of the thermal management component on the first wall can be enhanced.

According to a third aspect, an electric device is provided, including: the battery according to the second aspect or any possible implementation of the second aspect, where the battery is configured to provide electrical energy to the electric device.

The beneficial effects of the third aspect and any possible implementation thereof correspond to the beneficial effects of the second aspect and any possible implementation thereof, and are not reiterated herein.

According to a fourth aspect, a method for assembling a battery is provided, where the battery includes: a box and a first component; and the battery cell according to the first aspect or any possible implementation of the first aspect, where a recess of the battery cell is configured to accommodate the first component; the method including: accommodating the first component in the recess; and sleeving the box over the exterior of the first component and the battery cell.

The beneficial effects of the fourth aspect and any possible implementation thereof correspond to the beneficial effects of the second aspect and any possible implementation thereof, and are not reiterated herein.

According to a fifth aspect, a method for assembling a battery cell is provided, the battery cell being the battery cell according to the first aspect or any possible implementation of the first aspect. The battery cell includes a housing, an end cover, an electrode assembly, and a connecting member, where a second wall of the housing is provided with an electrode terminal, the connecting member being electrically connected to the electrode terminal. The method includes: at an opening of the housing, connecting a tab of the electrode assembly to the connecting member by laser welding, where the tab faces a first wall of the housing, the first wall and the second wall being two intersecting sidewalls of the housing; bending the tab to allow the electrode assembly to enter and be accommodated in the housing through the opening; and closing the opening with the end cover.

Since the tab is accommodated in the receiving portion, the space available for welding is relatively narrow, and ultrasonic welding can hardly ensure welding quality and precision; therefore, by implementing the above configuration, connecting the tab to the connecting member by laser welding and then bending the tab can enhance welding quality and assembly efficiency.

### BRIEF DESCRIPTION OF DRAWINGS

FIG. 1 is a schematic structural diagram of a vehicle 1 according to an embodiment of this application;
FIG. 2 is a schematic structural diagram of a battery 10 according to an embodiment of this application;
FIG. 3 is a schematic structural diagram of a battery cell 20 according to an embodiment of this application;
FIG. 4 is a schematic structural diagram of a battery cell according to an embodiment of this application;
FIG. 5 is an X-Z plane view of a battery cell according to an embodiment of this application;
FIG. 6 is an exploded view of a battery cell according to an embodiment of this application;
FIG. 7 is an A-A cross-sectional view of an end cover of the battery cell shown in FIG. 5;
FIG. 8 is a B-B cross-sectional view of the battery cell shown in FIG. 5;
FIG. 9 is a partial enlarged view at C in FIG. 8;
FIG. 10 is a schematic structural diagram of a battery cell 20 and a first component 12 according to another embodiment of this application;
FIG. 11 is a front view of the battery cell 20 and the first component 12 shown in FIG. 10;
FIG. 12 is a side view of the battery cell 20 and the first component 12 shown in FIG. 10;
FIG. 13 is a D-D plane cross-sectional view of the embodiment shown in FIG. 10;
FIG. 14 is a schematic structural diagram of a battery 10 according to an embodiment of this application;
FIG. 15 is an exploded view of the battery 10 shown in FIG. 14;
FIG. 16 is an X-Y plane view of the battery 10 shown in FIG. 14;
FIG. 17 is a view of the E-E cross section in FIG. 16;
FIG. 18 is a partial enlarged view at F in FIG. 17;
FIG. 19 is a schematic structural diagram of a first component and a battery cell 20 of a battery 10 according to another embodiment of this application;
FIG. 20 is an X-Y plane view of the embodiment shown in FIG. 19, namely a bottom view of the embodiment shown in FIG. 19 in a Z direction;
FIG. 21 is a view of the G-G cross section in FIG. 20;
FIG. 22 is a partial enlarged view at K in FIG. 21; and
FIG. 23 is a schematic diagram of a method for assembling a battery cell according to some embodiments of this application.

### DESCRIPTION OF EMBODIMENTS

The embodiments of this application are further described in detail below with reference to the accompanying drawings and embodiments. The detailed descriptions of the following embodiments and the accompanying drawings are used to exemplarily illustrate the principles of this application, but cannot be used to limit the scope of this application, that is, this application is not limited to the described embodiments.

In the description of this application, unless otherwise specified, "multiple" means at least two; the terms "upper", "lower", "left", "right", "inside", "outside", and similar indications of orientation or positional relationships are merely for convenience and brevity of description of this application, and do not indicate or imply that the referenced devices or components must have specific orientations or be constructed or operated in specific orientations. Therefore, these terms shall not be construed as limitations on this application. Additionally, the terms "first", "second", "third", and similar terms are used solely for descriptive purposes and shall not be understood as indicating or implying relative importance. "Perpendicular" is not strictly perpendicular but within an allowable error range. "Parallel" is not strictly parallel but within an allowable error range.

Reference to "embodiment" in this application means that specific features, structures, or characteristics described in connection with the embodiment may be included in at least one embodiment of this application. The appearance of this phrase in various locations in the specification does not necessarily refer to the same embodiment, nor is it an independent or alternative embodiment mutually exclusive with other embodiments. It is explicitly or implicitly understood by persons skilled in the art that the embodiments described in this application may be combined with other embodiments.

The orientation terms appearing in the following description refer to directions shown in the figures and do not limit the specific structure of this application. In the description of this application, unless otherwise expressly specified and limited, the terms "installed", "connected", and "connection" shall be understood in a broad sense; for example, it may be a fixed connection, a detachable connection, or an integral connection; it may be a direct connection or an indirect connection through an intermediary. Persons of ordinary skill in the art can understand the specific meanings of these terms in this application as appropriate to specific situations.

The term "and/or" in this application is merely an associative relationship describing associated objects, indicating that three relationships may exist. For example, A and/or B may indicate three cases: presence of A alone; presence of both A and B; and presence of B alone. Additionally, the character "/" in this application generally indicates an "or" relationship between contextually associated objects.

In the embodiments of this application, the battery cell may be a secondary battery, the secondary battery referring to a battery cell that can be recharged to activate active materials for continuous use after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery. This is not limited in the embodiments of this application.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is disposed between the positive electrode and the negative electrode to prevent a short circuit between the positive electrode and the negative electrode and to allow the active ions to pass through.

In some embodiments, the positive electrode may be a positive electrode plate, the positive electrode plate including a positive electrode current collector and a positive electrode active material disposed on at least one surface of the positive electrode current collector.

In an example, the positive electrode current collector includes two opposing surfaces in a thickness direction of the positive electrode current collector, the positive electrode active material being disposed on either or both of the two opposing surfaces of the positive electrode current collector.

In an example, the positive electrode current collector may be a metal foil current collector or a composite current collector. The material of the metal foil may include aluminum or stainless steel treated with a silver surface, stainless steel, copper, aluminum, nickel, carbon electrode, carbon, nickel, or titanium. The composite current collector may include a polymer material substrate and a metal layer. The composite current collector may be formed by forming a metal material (aluminum, aluminum alloy, nickel, nickel alloy, titanium, titanium alloy, silver, silver alloy, or similar) on a polymer material substrate (such as a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, and their respective modified compounds. However, this application is not limited to these materials and may alternatively use other conventional well-known materials that can be used as positive electrode active materials for batteries. These positive electrode active materials may be used alone or in combination of two or more. Examples of lithium-containing phosphates may include, but are not limited to, at least one of lithium iron phosphate (such as LiFePO4, also abbreviated as LFP), a composite material of lithium iron phosphate and carbon, lithium manganese phosphate (such as LiMnPO4), a composite material of lithium manganese phosphate and carbon, lithium iron manganese phosphate, or a composite material of lithium iron manganese phosphate and carbon.

In some embodiments, the positive electrode may employ a foam metal. The foam metal may be foam nickel, foam copper, foam aluminum, foam alloy, or foam carbon. When the foam metal serves as the positive electrode, the surface of the foam metal may not be provided with a positive electrode active material, though a positive electrode active material may also be provided. As an example, the foam metal may further be filled or deposited with a lithium source material, potassium metal, or sodium metal, the lithium source material being lithium metal and/or a lithium-rich material.

In some embodiments, the negative electrode may be a negative electrode plate, the negative electrode plate including a negative electrode current collector.

As an example, the negative electrode current collector may employ a metal foil, a foam metal, or a composite current collector. The material of the metal foil may include aluminum or stainless steel treated with a silver surface, stainless steel, copper, aluminum, nickel, carbon electrode, carbon, nickel, or titanium. The composite current collector may include a polymer material substrate and a metal layer. The foam metal may be foam nickel, foam copper, foam aluminum, foam alloy, or foam carbon. The composite current collector may be formed by forming a metal material (copper, copper alloy, nickel, nickel alloy, titanium, titanium alloy, silver, silver alloy, or similar) on a polymer material substrate (such as a substrate of polypropylene, polyethylene terephthalate, polybutylene terephthalate, polystyrene, or polyethylene). In some embodiments, the material of the positive electrode current collector may be aluminum, and the material of the negative electrode current collector may be copper.

In some embodiments, the electrode assembly further includes a separator, the separator being disposed between the positive electrode and the negative electrode.

In some embodiments, the separator is an isolating film. The type of isolating film is not particularly limited in this application, and any porous structure isolating film with good chemical stability and mechanical stability may be selected.

In an example, the main materials of the isolating film may be selected from at least one of glass fiber, non-woven fabric, polyethylene, polypropylene, polyvinylidene fluoride, or ceramics.

In some embodiments, the separator is a solid electrolyte. The solid electrolyte is disposed between the positive electrode and the negative electrode, serving to transport ions and isolate the positive electrode and the negative electrode.

In some embodiments, the battery cell further includes an electrolyte, the electrolyte serving to conduct ions between the positive electrode and the negative electrode. The type of electrolyte is not specifically limited in this application and may be selected according to requirements. The electrolyte may be liquid, gel, or solid.

In some embodiments, the electrode assembly is a wound structure. The positive electrode plate and the negative electrode plate are wound into a wound structure.

In some embodiments, the electrode assembly is a laminated structure.

As an example, multiple positive electrode plates and multiple negative electrode plates may be provided, the multiple positive electrode plates and multiple negative electrode plates being alternately stacked.

As an example, multiple positive electrode plates may be provided, the negative electrode plate being folded to form multiple stacked folding segments, a positive electrode plate being sandwiched between adjacent folding segments.

As an example, both the positive electrode plate and the negative electrode plate may be folded to form multiple stacked folding segments.

As an example, multiple separators may be provided, respectively disposed between any adjacent positive electrode plates or negative electrode plates.

As an example, the separator may be continuously disposed, and arranged between any adjacent positive electrode plates or negative electrode plates by folding or winding.

In some embodiments, the shape of the electrode assembly may be cylindrical, flat, or prismatic.

In some embodiments, the electrode assembly is provided with a tab, the tab being configured to conduct current from the electrode assembly. The tab includes a positive tab and a negative tab.

In some embodiments, the battery cell may include a shell. The shell is configured to encapsulate the electrode assembly, the electrolyte, and other components. The shell may be a steel shell, an aluminum shell, a plastic shell (such as polypropylene), a composite metal shell (such as a copper-aluminum composite shell), an aluminum-plastic film, or similar.

As an example, the battery cell may be a cylindrical battery cell, a prismatic battery cell, a pouch battery cell, or a battery cell of other shapes, the prismatic battery cell including a square-shell battery cell, a blade-shaped battery cell, or a multi-prismatic battery, such as a hexagonal prismatic battery, with no particular limitation in this application.

In some embodiments, the shell includes an end cover and a housing, the housing being provided with an opening, and the end cover closing the opening to form a closed space for accommodating the electrode assembly and substances such as the electrolyte. The housing may be provided with one or more openings. One or more end covers may be provided.

In some embodiments, at least one electrode terminal is provided on the shell, the electrode terminal being electrically connected to the tab. The electrode terminal may be directly connected to the tab or indirectly connected to the tab through a connecting member. The electrode terminal may be provided on the end cover or on the housing.

To meet different power demands, the battery may include multiple battery cells, where the multiple battery cells may be connected in series, in parallel, or in a mixed configuration, the mixed configuration referring to a combination of series and parallel connections. Optionally, multiple battery cells may first be connected in series, in parallel, or in a mixed configuration to form a battery module, and then multiple battery modules may be connected in series, in parallel, or in a mixed configuration to form a battery. In other words, multiple battery cells may directly form a battery, or may first form battery modules, which then form a battery. The battery is further provided in an electric device to supply electrical energy to the electric device.

To facilitate connection with other components, the tab typically protrudes from a surface of the electrode assembly, meaning that the tab occupies a portion of the space of the battery cell in the direction of its protrusion. However, this results in wasted space within the battery cell and increases the complexity of battery processing and assembly. Since a battery often includes multiple battery cells, not only is assembly complex, but it also leads to significant space wastage, reducing the energy density of the battery.

The embodiments of this application provide a battery cell, a battery, an electric device, and a method for assembling a battery, capable of enhancing the space utilization rate of the battery, thereby improving battery performance. The battery cell of the embodiments of this application is configured for use in a battery, the battery cell including: a first wall, the first wall being provided with a recess recessed toward the interior of the battery cell, the recess being configured to accommodate a first component of the battery.

By providing a recess on the first wall that is recessed toward the interior of the battery cell, the embodiments of this application can reduce the space occupied by the battery cell; and utilizing the recess to accommodate the first component of the battery enables effective use of space within the battery cell that was previously underutilized, making the structure of each component of the battery more compact, enhancing the space utilization rate and energy density of the battery.

The technical solutions described in the embodiments of this application are applicable to various devices using batteries, such as mobile phones, portable devices, notebook computers, electric bicycles, electric toys, power tools, electric vehicles, ships, and spacecraft, where spacecraft include airplanes, rockets, space shuttles, and spaceships.

It should be understood that the technical solutions described in the embodiments of this application are not only applicable to the devices described above but also to all devices using batteries. However, for brevity of description, electric vehicles are used as an example in the following embodiments.

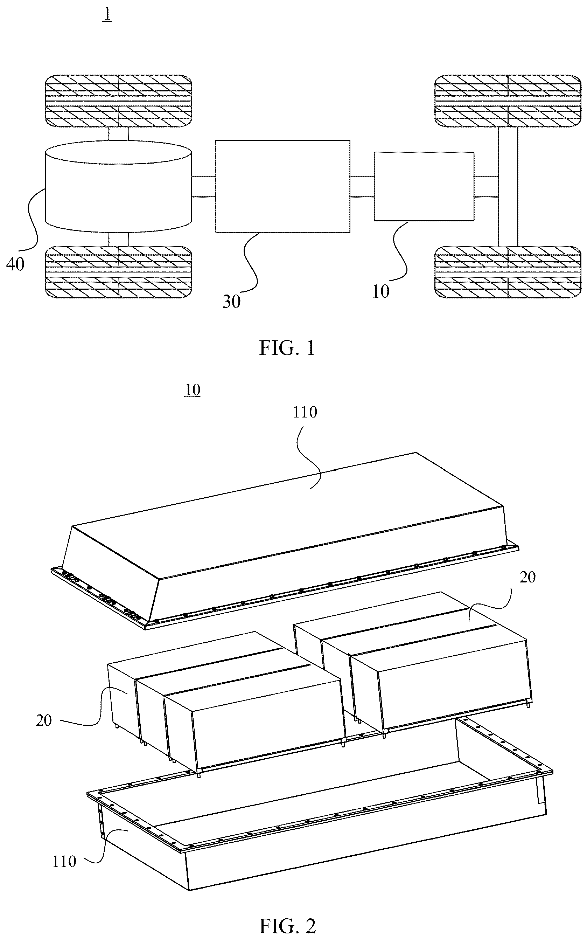

For example, FIG. 1 is a schematic structural diagram of a vehicle 1 according to an embodiment of this application. The vehicle 1 may be a fossil fuel vehicle, a natural-gas vehicle, or a new energy vehicle, the new energy vehicle being a battery electric vehicle, a hybrid electric vehicle, a range-extended vehicle, or similar. The interior of the vehicle 1 may be provided with a motor 40, a controller 30, and a battery 10, the controller 30 being configured to control the battery 10 to supply power to the motor 40. For example, the battery 10 may be provided at the bottom, front, or rear of the vehicle 1. The battery 10 is configured to supply power to the vehicle 1. For example, the battery 10 may serve as an operational power source for the vehicle 1, configured for a circuit system of the vehicle 1, for example, to satisfy power needs for starting, navigation, and running of the vehicle 1. In another embodiment of this application, the battery 10 may serve not only as the operational power source for the vehicle 1 but also as a driving power source for the vehicle 1, replacing or partially replacing fossil fuel or natural gas to provide driving traction for the vehicle 1.

To meet different power usage demands, the battery 10 may include multiple battery cells 20. For example, as shown in FIG. 2, which is a schematic structural diagram of a battery 10 according to an embodiment of this application, the battery 10 may include multiple battery cells 20. The battery 10 may further include a box 110. The interior of the box 110 is a hollow structure. The multiple battery cells 20 are accommodated in the box 110. For example, the multiple battery cells 20 are connected in parallel, in series, or in a mixed configuration of parallel and series, and then placed into the box 110.

Optionally, the battery 10 may further include other structures, which are not described in detail herein. For example, the battery 10 may further include a busbar component, the busbar component being configured to achieve electrical connection between the multiple battery cells 20, such as in parallel, in series, or in a mixed configuration, the mixed configuration referring to a combination of series and parallel connections. The battery may also be referred to as a battery pack. Specifically, the busbar component may achieve electrical connection between the battery cells 20 by connecting electrode terminals of the battery cells 20. Further, the busbar component may be fixed to the electrode terminals of the battery cells 20 by welding. Electrical energy of the multiple battery cells 20 may further be drawn out through a conductive mechanism passing through the box. Optionally, the conductive mechanism may also belong to the busbar component.

According to different power demands, the number of battery cells 20 may be set to any value. The multiple battery cells 20 may be connected in series, in parallel, or in a mixed configuration to achieve large capacity or power. In some embodiments, multiple battery cells 20 may first be connected in series, in parallel, or in a mixed configuration to form a battery module, and then multiple battery modules may be connected in series, in parallel, or in a mixed configuration to form a battery. In other words, multiple battery cells 20 may directly form a battery, or may first form battery modules, which then form the battery 10. Since the number of battery cells 20 included in each battery 10 may be large, to facilitate installation, the battery cells 20 may be arranged in groups, each group of battery cells 20 forming a battery module. The number of battery cells 20 included in a battery module is not limited and may be set according to requirements. The battery 10 may include multiple battery modules, these battery modules being connected in series, in parallel, or in a mixed configuration.

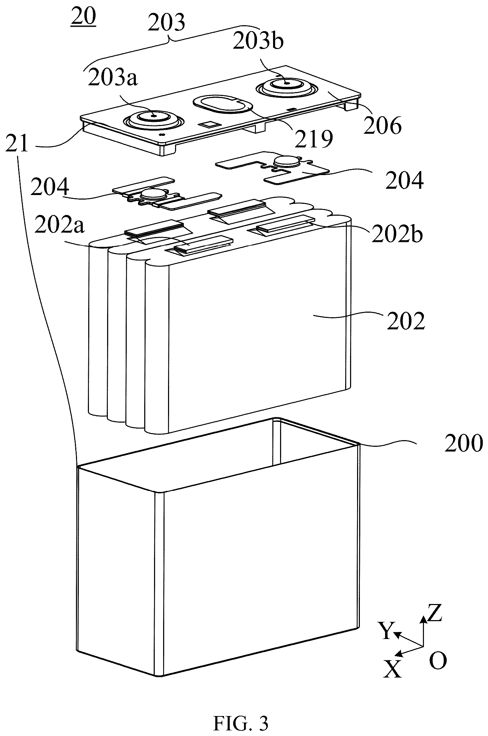

FIG. 3 is a schematic structural diagram of a battery cell 20. As shown in FIG. 3, the battery cell 20 includes one or more electrode assemblies 202, a housing 200, and an end cover 206. The housing 200 and the end cover 206 form a casing or battery box 21. Walls of the housing 200 and the end cover 206 are referred to as walls of the battery cell 20. As a prismatic battery cell 20, the walls of the housing 200 include a bottom wall and four sidewalls. The housing 200 is determined based on the shape of one or more electrode assemblies 202 combined, for example, the housing 200 may be a hollow cuboid, cube, or cylinder, with one face of the housing 200 having an opening to allow one or more electrode assemblies 202 to be placed within the housing 200. For example, when the housing 200 is a hollow cuboid or cube, one plane of the housing 200 is an open face, meaning the plane lacks a wall, allowing communication between the interior and exterior of the housing 200. When the housing 200 is a hollow cylinder, an end face of the housing 200 is an open face, meaning the end face lacks a wall, allowing communication between the interior and exterior of the housing 200. The end cover 206 covers the opening and is connected to the housing 200 to form a closed cavity for accommodating the electrode assembly 202. The housing 200 is filled with an electrolyte, such as a liquid electrolyte.

The battery cell 20 may further include two electrode terminals 203, the two electrode terminals 203 being provided on the end cover 206. The end cover 206 is typically flat in shape, the two electrode terminals 203 being fixed on a flat surface of the end cover 206, the two electrode terminals 203 being a positive electrode terminal 203a and a negative electrode terminal 203b, respectively. Each electrode terminal 203 is provided with a corresponding connecting member 204, which may alternatively be referred to as a current collecting member. The connecting member is located between the end cover 206 and the electrode assembly 202 and is configured to electrically connect the electrode assembly 202 to the electrode terminal 203.

As shown in FIG. 3, each electrode assembly 202 has a first tab 202a and a second tab 202b. The first tab 202a and the second tab 202b have opposite polarities. For example, when the first tab 202a is a positive tab, the second tab 202b is a negative tab. The first tab 202a of one or more electrode assemblies 202 is connected to one electrode terminal through one connecting member 204, and the second tab 202b of one or more electrode assemblies 202 is connected to another electrode terminal through another connecting member 204. For example, the positive electrode terminal 203a is connected to the positive tab through one connecting member 204, and the negative electrode terminal 203b is connected to the negative tab through another connecting member 204.

In the battery cell 20, according to actual usage requirements, the electrode assembly 202 may be provided as a single unit or multiple units. As shown in FIG. 3, four independent electrode assemblies 202 are provided within the battery cell 20.

The battery cell 20 may further be provided with a pressure relief mechanism 219. The pressure relief mechanism 219 is configured to actuate to release internal pressure or temperature when the internal pressure or temperature of the battery cell 20 reaches a threshold.

The pressure relief mechanism 219 may be various possible pressure relief structures, which are not limited in the embodiments of this application. For example, the pressure relief mechanism 219 may be a temperature-sensitive pressure relief mechanism, the temperature-sensitive pressure relief mechanism being configured to melt when an internal temperature of the battery cell 20 provided with the pressure relief mechanism 219 reaches a threshold; and/or, the pressure relief mechanism 219 may be a pressure-sensitive pressure relief mechanism, the pressure-sensitive pressure relief mechanism being configured to rupture when an internal air pressure of the battery cell 20 provided with the pressure relief mechanism 219 reaches a threshold.

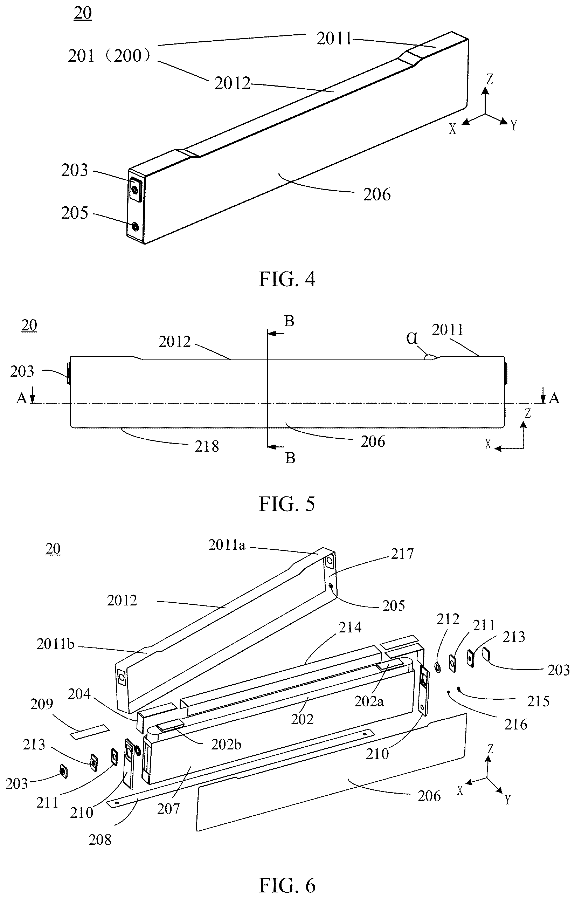

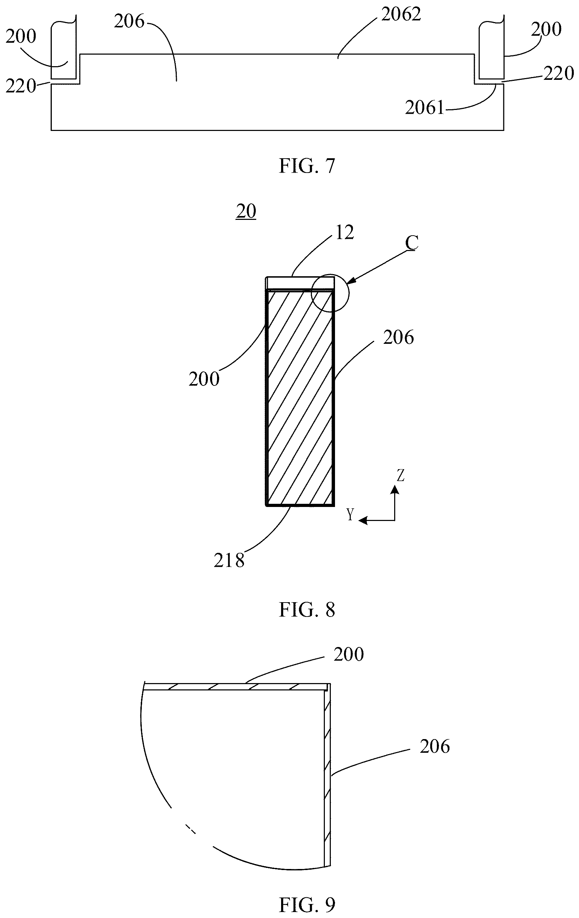

FIG. 4 is a schematic structural diagram of a battery cell according to an embodiment of this application, FIG. 5 is an X-Z plane view of a battery cell according to an embodiment of this application, FIG. 6 is an exploded view of a battery cell according to an embodiment of this application, FIG. 7 is an A-A cross-sectional view of an end cover of the battery cell shown in FIG. 4; FIG. 8 is a B-B cross-sectional view of the battery cell shown in FIG. 4; and FIG. 9 is a partial enlarged view at C in FIG. 8.

The battery cell 20 of the embodiments of this application is provided in a battery, optionally, the battery being the battery 10 shown in FIG. 2, the battery being in various forms such as a battery module, a battery pack, an energy storage device, or CTC (Cell to Chassis, where cells are directly integrated into the vehicle chassis, also known as battery chassis integration). As shown in FIGs. 4 to 5, the battery cell 20 may include: a first wall 201, where the first wall 201 is provided with a recess 2012 recessed toward the interior of the battery cell 20, the recess 2012 being configured to accommodate a first component of the battery.

It should be understood that the shape of the battery cell of the embodiments of this application may be configured according to actual requirements. For example, this application primarily describes a cuboid battery cell 20 as shown in FIGs. 4 to 9, but the embodiments of this application are not limited thereto; optionally, the battery cell 20 may also be cylindrical or of other shapes. The first wall 201 may be any wall of the battery cell 20 capable of being provided with the recess 2012, and each battery cell 20 may have more than one first wall 201.

It should be understood that the recess 2012 of the embodiments of this application is formed by the first wall 201 of the battery cell 20 being recessed toward the interior of the battery cell 20, for example, as shown in FIG. 6, the recess 2012 being recessed toward the interior of the battery cell 20 along a second direction Z. Optionally, the recess 2012 may be provided at any position permitted by the structure of the first wall 201. For example, as shown in FIGs. 4 to 5, one recess is provided on the first wall 201; alternatively, unlike what is shown in FIGs. 4 to 5, multiple recesses 2012 may be provided on the first wall 201. When the battery cell 20 includes multiple first walls 201, each first wall 201 may be provided with a recess 2012. The structural parameters, number, and position of the recess 2012 may be determined based on the structure of the battery cell 20, the structure of the first component, and the manner of cooperation between the first component and the battery cell 20. Optionally, the shape of the recess 2012 may also have various implementations, for example, as shown in FIGs. 4 to 5, the cross-sectional shape of the recess 2012 on the X-Z plane is trapezoidal, and the cross-sectional shape on the Y-Z plane is rectangular, or it may be other shapes different from those shown in FIGs. 4 to 5, such as semicircular, triangular, or irregular polygonal shapes.

Optionally, the first component in the embodiments of this application may be any component in the battery, such as a thermal management component, a flexible printed circuit (FPC) board, or a sampling harness board. The recess 2012 may be configured to accommodate one or more first components, the first component being entirely or partially accommodated in the recess.

By providing a recess 2012 on the first wall 201 that is recessed toward the interior of the battery cell 20, the embodiments of this application can reduce the volume of the battery cell 20; simultaneously, the number of internal components of the battery cell 20 can be decreased, thereby reducing the structural complexity of the battery cell 20 and the complexity of the assembly process. Utilizing the recess 2012 to accommodate the first component of the battery enables a more compact battery structure, enhancing the space utilization rate of the battery.

Optionally, as shown in FIGs. 4 to 5, in some embodiments of this application, the recess 2012 extends through the battery cell 20 along a first direction Y, the first direction Y being perpendicular to a thickness direction of the first wall 201, namely the Z direction in the figures. Optionally, the recess 2012 may also extend through the battery cell 20 along other directions different from the Y direction, for example, along the X direction, any direction between an angle formed by the Y direction and the Z direction in FIGs. 4 to 6, or any direction between an angle formed by the X direction and the Z direction.

When the recess 2012 extends through the battery cell 20 along the first direction Y, the volume of the battery cell 20 can be reduced; and when multiple battery cells 20 are arranged in combination, multiple recesses 2012 can be interconnected to form a larger accommodation space, thereby enabling accommodation of larger components in the battery, enhancing the space utilization rate of the battery.

Optionally, the recess 2012 may also not extend through the battery cell 20, for example, being recessed from the first wall 201 toward the interior of the battery cell 20, but a projection of the recess 2012 in the thickness direction of the first wall 201 does not exceed the range of the first wall 201, or a projection of the recess 2012 in the thickness direction of the first wall 201 partially coincides with an edge of the first wall 201, while the remaining portion does not coincide with the edge of the first wall 201. Optionally, whether the recess 2012 extends through the battery cell 20 is related to the shape of the first component and the overall structure of the battery 10, which is not limited in this application.

Optionally, in some embodiments of this application, a wall adjacent to the first wall 201 of the battery cell 20 and a region of the first wall 201 excluding the recess 2012 form a receiving portion 2011 protruding toward the exterior of the battery cell 20; and the receiving portion 2011 is configured to accommodate components inside the battery cell 20. Since the recess 2012 is recessed toward the interior of the battery cell 20, in the second direction Z, a portion of the first wall 201 excluding the recess 2012 extends away from the interior of the battery cell 20 along the second direction Z; in other words, due to the recess 2012 being recessed toward the interior of the battery cell 20 on the first wall 201, a region of the first wall 201 excluding the recess 2012, together with other walls of the battery cell 20 and/or sidewalls of the recess 2012, enclose a cavity protruding away from the interior of the battery cell 20, the cavity constituting the receiving portion 2011. Utilizing the receiving portion 2011 to accommodate components inside the battery cell 20 can make the structure of the battery cell 20 more compact, enhancing the space utilization rate of the battery 10. Optionally, the components accommodated by the receiving portion 2011 may be the first tab 202a, the second tab 202b, and/or the connecting member 204 as shown in FIG. 3.

Unlike the embodiments shown in FIGs. 4 to 9, in other embodiments of this application, the first wall 201 may include at least two recesses 2012, the receiving portion 2011 being located between two adjacent recesses 2012 of the at least two recesses 2012. For example, as shown in FIGs. 7 to 9, three recesses 2012 are sequentially provided on the first wall 201 along the X direction, with one receiving portion 2011 provided between every two recesses 2012, such that the tabs 2021 are all accommodated in the receiving portions 2011. In cases where the battery cell 20 includes multiple tabs 2021, each tab can be individually protected. Additionally, the recesses 2012 can be configured to adapt to the shape of the first component 12, thereby further enhancing the space utilization rate of the battery cell 20.

Optionally, in some embodiments of this application, as shown in FIGs. 4 to 6, a connection between a bottom wall of the recess 2012 and a sidewall of the recess 2012 is provided with a chamfer; and/or a connection between the sidewall of the recess 2012 and a wall of the receiving portion 2011 away from the electrode assembly 202 is provided with a chamfer. The provision of the chamfer can reduce the likelihood of stress concentration at the connection, thereby improving the reliability of the battery cell 20. Optionally, the chamfer at the connection between the bottom wall of the recess 2012 and the sidewall of the recess 2012 may be a rounded corner to facilitate the processing and forming of the housing 200. Optionally, the radius of the rounded corner may be set within a range of R ≤ 3 mm to facilitate the processing and forming of the housing.

Optionally, in some embodiments of this application, an angle α formed between the bottom wall of the recess 2012 and the sidewall of the recess 2012 satisfies a value range of: 90° ≤ α < 180°. This angle may be set according to process requirements or the shape of the first component to balance the demands for maximizing space utilization and structural strength. Optionally, the angle α formed between the bottom wall of the recess and the sidewall of the recess satisfies a value range of: 100° ≤ α ≤ 150°. When the angle is too small, it may be difficult to meet the demand for reducing stress concentration at the connection, and it may also increase processing difficulty; therefore, the angle should not be too small. When the angle is too large, although it effectively reduces stress concentration, the connection occupies a larger space, leading to space wastage; therefore, the angle should not be too large. When satisfying 100° ≤ α ≤ 150°, the demands for saving space and reducing stress concentration can be better balanced.

Optionally, as shown in FIG. 6, in some embodiments of this application, the battery cell 20 includes: an electrode assembly 202, where the electrode assembly includes a tab 2021, the tab 2021 being at least partially accommodated in the receiving portion 2011. Since the tab 2021 typically protrudes from an end surface of the electrode assembly 202, the dimension of the electrode assembly 202 in the extension direction of the tab 2021 includes the dimension of the tab 2021, while the area occupied by the tab 2021 is usually small, resulting in a large gap between the end surface of the electrode assembly 202 and an inner surface of the housing 200 opposite thereto, excluding the region where the tab 2021 is located, after the electrode assembly 202 is assembled into the housing 200. To reduce the probability of deformation of the housing 200 under external forces affecting the tab 2021, a support member is typically provided at the gap, which reduces the volumetric energy density of the battery and increases assembly complexity due to additional components. By accommodating the tab 2021 in the receiving portion 2011, the embodiments of this application can provide necessary protection to the tab 2021, while the battery cell can be spared from providing a support member, which would otherwise be used in the absence of the recess 2012 to prevent deformation of the housing 200 under external forces, thereby reducing assembly complexity.

Optionally, in some embodiments of this application, as shown in FIG. 6, the receiving portion 2011 includes a first receiving portion 2011a and a second receiving portion 2011b, the electrode assembly 202 including a first tab 202a located in the first receiving portion 2011a and a second tab 202b located in the second receiving portion 2011b; and the recess 2012 is located between the first receiving portion 2011a and the second receiving portion 2011b.

It should be understood that in the embodiments shown in FIGs. 4 to 6, the first tab 202a and the second tab 202b of the battery cell 20 are respectively provided at two ends of an end surface opposite to the first wall 201; therefore, providing the first receiving portion 2011a and the second receiving portion 2011b at two ends of the first wall 201 to respectively accommodate the two tabs can balance the demands for protecting the tabs and fully utilizing the space of the battery cell 20. For other types of battery cells with different numbers and positions of tabs, optionally, corresponding receiving portions may be provided according to the number and position of the tabs, such that each receiving portion accommodates one tab, or one receiving portion accommodates multiple tabs, to balance the protection of the tabs and the full utilization of the space of the battery cell.

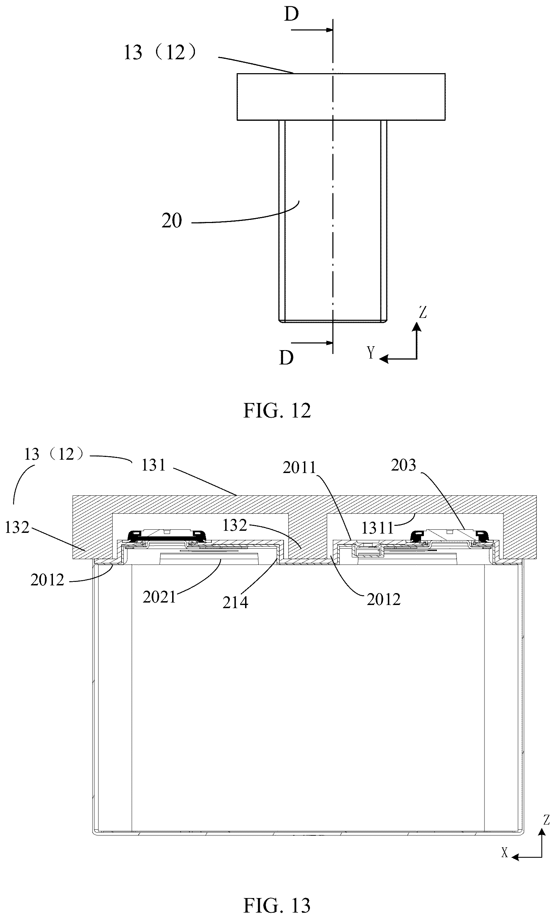

Optionally, in some embodiments of this application, as shown in FIG. 6 or FIG. 13, a first end surface of the electrode assembly 202 is provided with a tab 2021, the battery cell 20 further including: a first insulating structure 214, where the first insulating structure 214 isolates the first end surface from a bottom wall of the recess 2012, the first insulating structure 214 being located in a region of the first end surface excluding the tab 2021. By providing the first insulating structure 214, a short circuit between the first end surface of the electrode assembly 202 and the bottom wall of the recess 2012 can be prevented, improving the reliability of the battery cell 20.

Optionally, in some embodiments of this application, for example, as shown in FIGs. 4 to 9, an electrode terminal 203 is provided on a second wall 217 of the battery cell 20, the tab 2021 being electrically connected to the electrode terminal 203 through a connecting member 204. The connecting member 204 may be an L-shaped bent structure; and under the premise of meeting current-carrying requirements, the length of the portion of the connecting member 204 located within the receiving portion 2021 should not be too long, preferably set within a range of 40-80 mm.

Optionally, in some embodiments of this application, as shown in FIG. 6, the battery cell 20 may further include: a carrying member 208 configured to carry the electrode assembly 202. Optionally, in some embodiments of this application, as shown in FIG. 6, the battery cell 20 may further include a liquid injection hole 205 for injecting an electrolyte, the liquid injection hole 205 being provided on a wall of the battery cell 20 as needed, for example, as shown in FIG. 6, provided on the second wall 217, the battery cell 20 further including a first sealing member 215 and a second sealing member 216 configured to seal the liquid injection hole 205. Optionally, in some embodiments of this application, as shown in FIG. 6, the battery cell 20 may further include: a Mylar (Mylar) sheet 207 provided on an outer surface of the electrode assembly 202, serving for insulation and protection. Optionally, in some embodiments of this application, as shown in FIG. 6, the battery cell 20 may further include: a first insulating member 210 and a second insulating member 211, the first insulating member 210 and the second insulating member 211 being provided between the electrode assembly 202 and an end surface of the electrode terminal 203, serving for insulation and protection; where the first insulating member 210 and the second insulating member 211 may be plastic components. Optionally, in some embodiments of this application, as shown in FIG. 6, the battery cell 20 may further include a sealing ring 212, the sealing ring 212 being provided in a gap between the electrode terminal 203 and the housing 200, serving for sealing. Optionally, in some embodiments of this application, as shown in FIG. 6, the battery cell 20 may further include a connecting piece 213, the connecting piece 213 being configured to fix the electrode terminal 203 to the housing 200, optionally, the connecting piece 213 being a riveting piece, and the electrode terminal 203 being riveted to the housing 200 through the connecting piece 213.

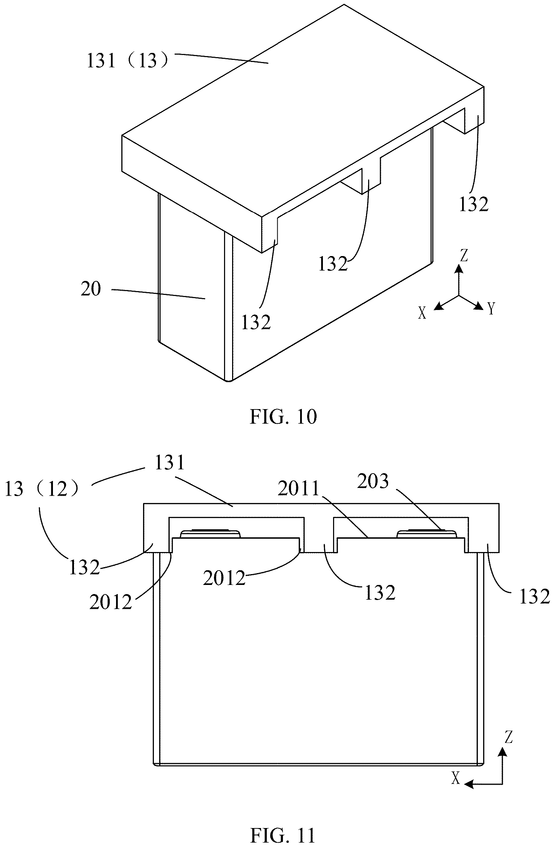

FIG. 10 is a schematic structural diagram of a battery cell 20 and a first component 12 according to another embodiment of this application. FIG. 11 is a front view of the battery cell 20 and the first component 12 shown in FIG. 10. FIG. 12 is a side view of the battery cell 20 and the first component 12 shown in FIG. 10. FIG. 13 is a D-D plane cross-sectional view of the embodiment shown in FIG. 10.

Optionally, in some embodiments of this application, as shown in FIGs. 4 to 9 or FIGs. 10 to 13, the battery cell 20 further includes an electrode terminal 203, the electrode terminal 203 being configured to be electrically connected to the tab 2021. The electrical connection of the electrode terminal 203 to the tab 2021 enables output of electrical energy. The electrode terminal 203 may further achieve electrical connection between multiple battery cells 20 by connecting to a busbar component.

Optionally, the electrode terminal 203 may be provided at different positions of the battery cell 20 according to actual requirements. For example, in the embodiments shown in FIGs. 10 to 13, two electrode terminals 203 are respectively provided on two receiving portions 2011; in this way, the electrode terminal 203 does not require a connecting member to achieve electrical connection with the tab 2021, simplifying the structure of the battery cell 20.

Optionally, the electrode terminal 203 may also, as shown in FIGs. 4 to 9, be respectively provided on two second walls 217, the second walls 217 intersecting the first wall 201; or provided on a third wall 218, the third wall 218 being opposite to the first wall 201. This configuration can accommodate the demands for outputting electrical energy from different types of battery cells 20, enabling flexible electrical connections between multiple battery cells 20.

Optionally, in some embodiments of this application, as shown in FIGs. 4 to 9 or FIGs. 10 to 13, the battery cell 20 further includes a connecting member 204, the connecting member 204 being configured to connect the tab 2021 and the electrode terminal 203; and the connecting member 204 being at least partially accommodated in the receiving portion 2011. For example, as shown in FIGs. 4 to 9, the connecting member 204 is partially accommodated in the receiving portion 2011, or, unlike the above embodiments, is fully accommodated in the receiving portion 2011. For example, in the embodiments shown in FIGs. 10 to 13, when the electrode terminal 203 is provided on the receiving portion 2011, the connecting member may be fully accommodated in the receiving portion 2011.

Optionally, in some embodiments of this application, the battery cell 20 further includes a second insulating structure 209, the second insulating structure 209 isolating the connecting member 204 from a surface of the receiving portion 2011 opposite to the connecting member 204. By providing the second insulating structure 209, a short circuit between the connecting member 204 and an inner wall of the receiving portion 2011 can be prevented, improving the reliability of the battery cell 20. Optionally, the first insulating structure 214 and the second insulating structure 209 may be independent components or integrally formed components. Optionally, the first insulating structure 214 may be an adhesive tape or a plastic material, and the second insulating structure 209 may be an adhesive tape or a plastic material, where the plastic material may be, for example, thermoplastic polyester PET (Polyethylene terephthalate, polyethylene terephthalate).

Optionally, in some embodiments of this application, as shown in FIGs. 6 to 9, the battery cell 20 further includes: a housing 200 having an opening; and an end cover 206 configured to close the opening; where the first wall 201 is a wall of the housing, or the first wall 201 is the end cover. The electrode assembly 202 accommodated in the battery cell 20 may have various different structures, and which wall of the housing 200 the first wall 201 specifically is may be determined based on the structure of the electrode assembly 202, thereby better balancing the demands for saving space and reducing assembly complexity.

Optionally, in some embodiments of this application, as shown in FIGs. 6 to 9, the end cover 206 includes a wall of the battery cell 20 having a largest area. This configuration enables easier installation of components inside the battery cell 20.

Optionally, as shown in FIGs. 7 to 9, an end surface 2061 of the end cover 206 opposite to the housing 200 may have a protrusion 2062, where a sidewall of the protrusion 2062 is opposite to an inner surface of the housing 200, and the end surface 2061 is weldable to an end surface of the housing 200, thereby improving the sealing performance of the battery cell 20. Optionally, the size of the protrusion 2062 may be determined based on process requirements and the size of the electrode assembly 202, the protrusion 2062 being capable of abutting the electrode assembly 202, thereby enhancing the stability of the electrode assembly 202 installation. Optionally, the end cover 206 may be welded to the housing 200 by T-shaped welding, as shown in FIG. 7, a welding zone 220 being formed between the end cover 206 and the housing 200. Optionally, an assembly gap between the end cover 206 and the housing 200 should not be too large, preferably less than or equal to 1 mm.

Optionally, in some embodiments of this application, the first component 12 may be a thermal management component 13, the thermal management component 13 being a significant component of the battery 10; accommodating the thermal management component 13 in the recess 2012 can enhance space utilization rate while enabling better thermal management of the region where the recess 2012 is located.

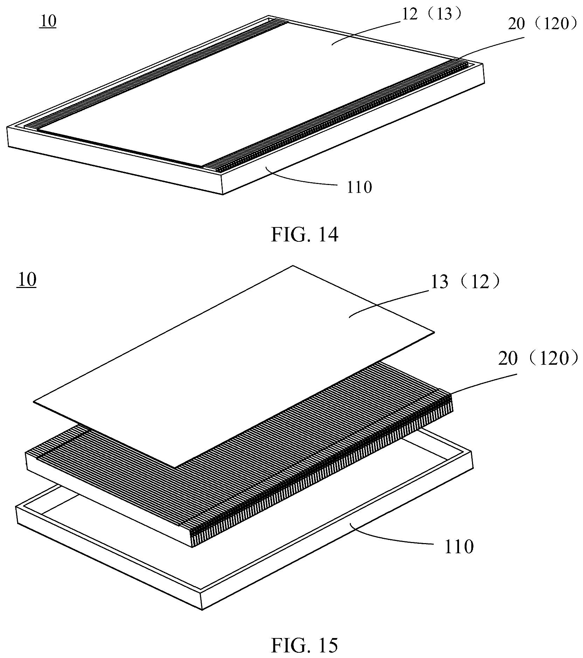

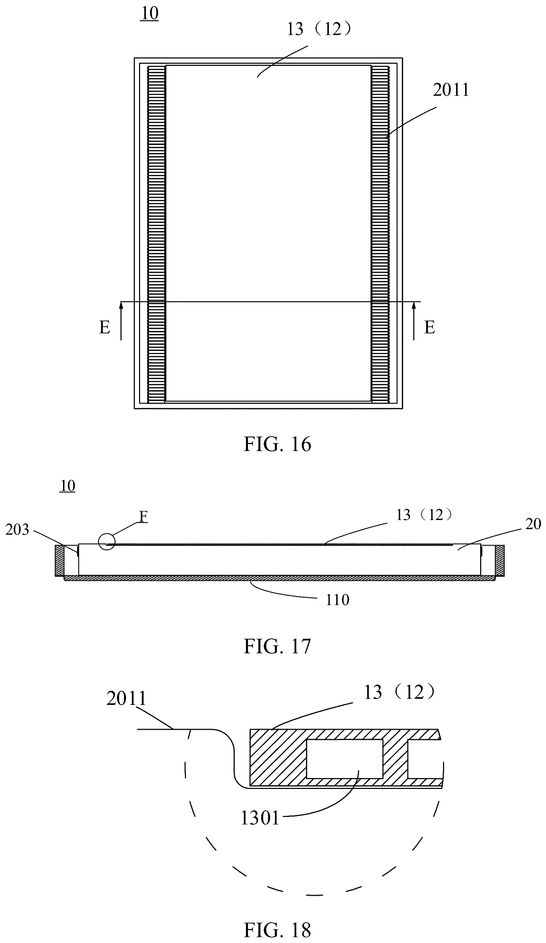

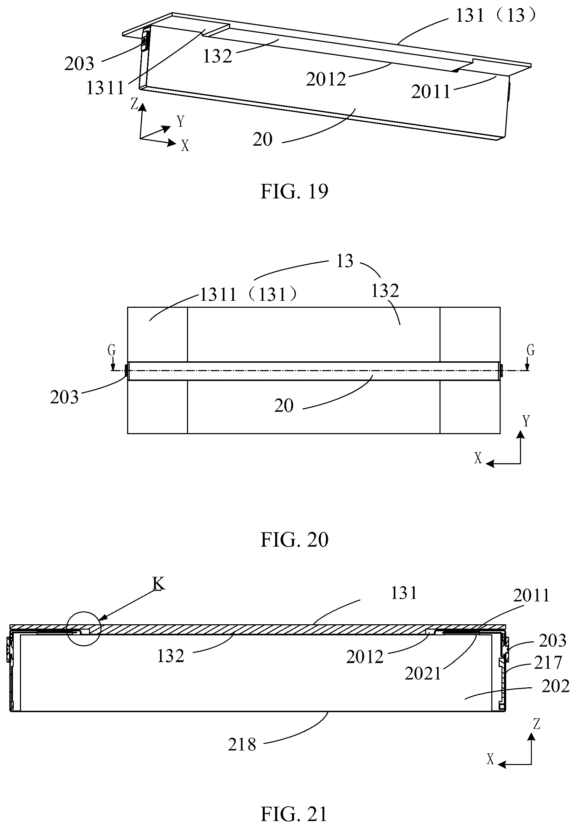

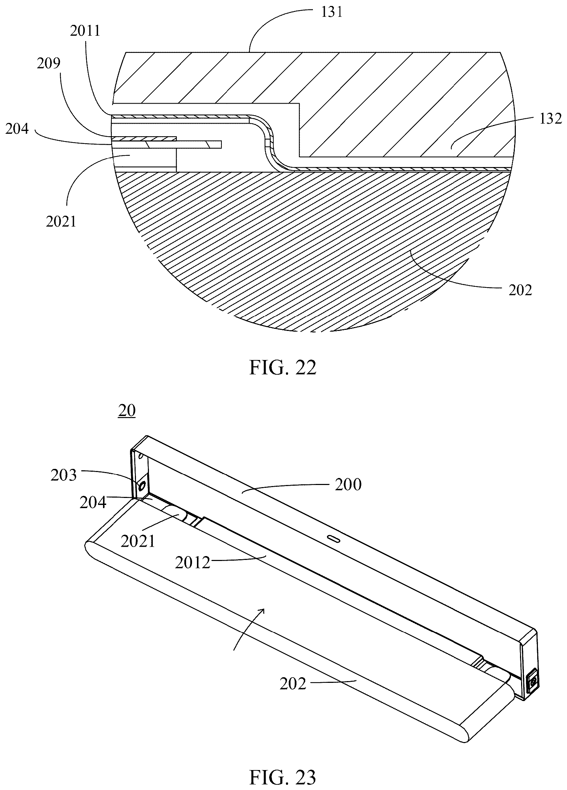

FIG. 14 is a schematic structural diagram of a battery 10 according to an embodiment of this application, FIG. 15 is an exploded view of the battery 10 shown in FIG. 14, FIG. 16 is an X-Y plane view of the battery 10 shown in FIG. 14, FIG. 17 is an E-E cross-sectional view in FIG. 16, FIG. 18 is a partial enlarged view at F in FIG. 17, FIG. 19 is a schematic structural diagram of a first component and a battery cell 20 of a battery 10 according to another embodiment of this application, FIG. 20 is an X-Y plane view of the embodiment shown in FIG. 19, namely a bottom view of the embodiment shown in FIG. 19 in the Z direction, FIG. 21 is a G-G cross-sectional view in FIG. 20, and FIG. 22 is a partial enlarged view at K in FIG. 21.

In some embodiments of this application, a battery 10 is further provided, the battery 10 including a first component 12 and the battery cell 20 of the foregoing embodiments, where the recess 2012 of the battery cell 20 is configured to accommodate the first component 12. The recess 2012 accommodating the first component 12 may, as shown in FIGs. 14 to 18, have the first component 12 entirely accommodated in the recess 2012, or, as shown in FIGs. 10 to 12 or FIGs. 19 to 21, have a portion of the first component 12 accommodated in the recess 2012. By utilizing the recess of the battery cell 20 to accommodate the first component 12, the battery 10 can achieve a more compact structure and higher space utilization rate.

In some embodiments of this application, as shown in FIGs. 14 to 18 or FIGs. 19 to 22, the first component 12 may include a thermal management component 13, the thermal management component 13 being at least partially accommodated in the recess 2012. This configuration can enhance space utilization rate while improving the thermal management effect for the region where the recess 2012 is located.

The thermal management component 13 is configured to accommodate a heat exchange medium to regulate the temperature of one or more battery cells 20. As shown in FIG. 18, the thermal management component 13 typically has a flow channel 1301, the flow channel 1301 referring to a passage through which the heat exchange medium flows inside the thermal management component 13. By reasonably configuring the structure of the flow channel 1301, the heat exchange performance of the thermal management component 13 can be improved. The heat exchange medium in the thermal management component 13 may be a liquid or gas, for example: water, air, a mixture of water and ethylene glycol, or some solid-liquid phase change materials, such as molten salt, paraffin, or acetic acid. Temperature regulation refers to heating or cooling the multiple battery cells 20. In the case of cooling the battery cell 20, the flow channel 1301 may accommodate a cooling medium to regulate the temperature of the multiple battery cells 20. At this time, the thermal management component 13 may also be referred to as a cooling component or cooling plate, and the accommodated heat exchange medium may also be referred to as a cooling medium or cooling heat exchange medium, more specifically, a coolant or cooling gas. Additionally, the thermal management component 13 may also be used for heating, which is not limited in the embodiments of this application. Optionally, the heat exchange medium may be circulated to achieve better temperature regulation effects. Optionally, the thermal management component 13 may further be provided with a manifold component and a pipeline, the pipeline being configured to transport the heat exchange medium, and the manifold component being configured to collect the heat exchange medium.

In the embodiments of this application, the first component 12 may include only the thermal management component 13 or may further include other components, the specific components included in the first component 12 being determined based on the type and specific structure of the battery 10. Optionally, the thermal management component 13 is at least partially accommodated in the recess 2012. As shown in FIGs. 14 to 18, the thermal management component 13 may be entirely accommodated in the recess 2012; or, as shown in FIGs. 19 to 22, the thermal management component 13 may be partially accommodated in the recess 2012. The assembly relationship between the thermal management component 13 and the recess 2012 may be determined by the structure of the thermal management component 13 and the configuration of the recess 2012.

In some embodiments of this application, a dimension of the thermal management component 13 in a second direction Z is less than or equal to a dimension of the recess 2012 in the second direction Z, where the second direction Z is a depth direction of the recess 2012. When the dimension of the thermal management component 13 in the second direction Z is less than or equal to the dimension of the recess 2012 in the second direction Z, the thermal management effect for the bottom wall of the recess 2012 is better; when the dimension is less than the dimension of the recess 2012, the remaining space of the recess 2012 can accommodate other components, enhancing the space utilization rate of the battery 10; when the dimension equals the dimension of the recess 2012, a surface of the thermal management component 13 away from the recess 2012 is substantially flush with a surface of the receiving portion 2011 away from the recess 2012, and a regular surface facilitates assembly of the thermal management component 13, the battery cell 20, and other components. Optionally, the thermal management component 13 and the battery cell 20 may be connected by adhesion, an adhesive layer with a thickness of 1-2 mm being provided between the thermal management component 13 and the battery cell 20. In this case, a dimension of the receiving portion 2011 in the second direction Z is preferably greater than or equal to the sum of the thickness of the adhesive layer and the dimension of the thermal management component 13 in the second direction Z. When the dimension of the receiving portion 2011 in the second direction Z equals the sum of the thickness of the adhesive layer and the dimension of the thermal management component 13 in the second direction Z, space can be maximally saved.

In some embodiments of this application, the battery cell 20 includes an electrode assembly 202, a sidewall of the recess 2012 and a region of the first wall 201 excluding the recess 2012 forming a receiving portion 2011; where the receiving portion 2011 is configured to accommodate a tab 2021 of the electrode assembly 202. As shown in FIGs. 14 to 18, a surface of the thermal management component 13 away from the recess 2012 is flush with a surface of the receiving portion 2011 away from the tab 2021. In the embodiments shown in FIGs. 14 to 17, the battery 10 includes a box 110 and multiple battery cells 20 of the same structural size, the multiple battery cells 20 being sequentially arranged along a second direction Y to form a battery cell group 120, the battery cell group 120 being accommodated in the box 110, and the first wall of the battery cell 20 having a recess 2012 and receiving portions 2011 respectively located on two sides of the first wall along a third direction X. As can be seen from FIGs. 14 to 15, the recesses 2012 of the multiple battery cells 20 are interconnected to form a groove structure, a plate-shaped thermal management component 13 being accommodated in the groove structure formed by the interconnected recesses 2012. It can be seen that if the battery cell 20 is not provided with the recess 2012 and the thermal management component 13 is directly provided on a surface of the battery cell group 120, in the second direction Z, a dimension of the space occupied by the battery cell 20 and the thermal management component 13 is the sum of their dimensions in the second direction Z; whereas, by providing the recess 2012 and having the surface of the thermal management component 13 away from the recess 2012 flush with the surface of the receiving portion 2011 away from the tab 2021, a dimension of the space occupied by the battery cell 20 and the thermal management component 13 in the second direction Z is less than the sum of their dimensions, thus providing the recess 2012 on the battery cell 20 can effectively save space. Simultaneously, the battery cell 20 can be spared from providing a support member for supporting the first wall 201, reducing assembly complexity while the shorter distance between the thermal management component 13 and the electrode assembly 202 can also enhance the thermal management effect of the thermal management component 13.

Optionally, as shown in FIG. 17, an electrode terminal 203 is provided on a second wall 217, the second wall 217 intersecting the first wall 201, and a gap existing between the second wall 217 and a wall of the box 110 opposite thereto, facilitating connection between electrode terminals 203 of different battery cells 20. Optionally, as shown in FIG. 18, a gap may also exist between the thermal management component 13 and a sidewall of the recess 2012, facilitating further fixation of the thermal management component 13 to the battery cell 20 using an adhesive.

Optionally, in some embodiments of this application, as shown in FIGs. 19 to 22, the thermal management component 13 includes a main body portion 131 and a protruding portion 132, where the protruding portion 132 protrudes from a second end surface 1311 of the main body portion 131 in a direction away from the second end surface 1311, at least a portion of the protruding portion 132 being accommodated in the recess 2012, where the second end surface 1311 is an end surface of the main body portion 131 opposite to the battery cell 20. In this way, the thermal management component 13 not only has a heat exchange surface opposite to the recess 2012 for thermal management of the region of the recess 2012 but also has a heat exchange surface opposite to the receiving portion 2011, enabling more comprehensive thermal management of the first wall 201, which is beneficial to enhancing battery performance.

In the embodiments shown in FIGs. 19 to 22, the thermal management component 13 includes one protruding portion 132 accommodated in the recess 2012, a region of the second end surface 1311 not provided with the protruding portion 132 being opposite to the receiving portion 2011. To facilitate electrical connection between electrode terminals 203, it is preferable to provide the electrode terminals 203 on a second wall 217 intersecting the first wall 201. During operation of the electrode assembly 202, a portion of a tab 202 connecting with a connecting member 204 has high current-carrying requirements; therefore, the provision of the protruding portion 132 can provide better thermal management for the portion of the tab 202 connecting with the connecting member 204.

A region of a surface of the main body portion 131 facing the battery cell 20 not provided with the protruding portion 132 is opposite to and abuts the receiving portion 2011. This can further enhance the thermal management effect of the thermal management component 13 on the battery cell.

Optionally, as shown in FIGs. 19 to 22 or the aforementioned FIGs. 10 to 13, the thermal management component 13 in the embodiments of this application may include one or more protruding portions 132, and the first wall 201 may also include multiple receiving portions 2011 and multiple recesses 2012. Optionally, the sizes of the receiving portions 2011 and the recesses 2012 may be configured according to the size of the protruding portion 132 to enhance space utilization rate.

Optionally, in some embodiments of this application, a dimension of the protruding portion 132 in the second direction Z is greater than or equal to a dimension of the recess 2012 in the second direction Z. For example, as shown in FIGs. 19 to 22, the dimension of the protruding portion 132 in the second direction Z equals the dimension of the recess 2012 in the second direction Z; or, as shown in the aforementioned FIGs. 10 to 13, the dimension of the protruding portion 132 in the second direction Z is greater than the dimension of the recess 2012 in the second direction Z. In this way, a wall of the protruding portion 132 opposite to the recess 2012 can be in close contact with a bottom wall of the recess 2012, enhancing heat exchange effects; simultaneously, the protruding portion 132 can provide a supporting function for the thermal management component 13, preventing the weight of the thermal management component 13 from acting on the receiving portion 2011 and the components accommodated therein, ensuring the reliability of the battery cell 20.

Optionally, in some embodiments of this application, for example, as shown in FIGs. 10 to 13, the thermal management component 13 includes at least two protruding portions 132, the protruding portions 132 being spaced apart from the receiving portion 2011. In this way, on one hand, effective thermal management can be provided for the first wall 201; on the other hand, multiple protruding portions 132 can provide supporting or balancing functions, enabling the thermal management component 13 to cooperate more stably with the battery cell 20.

Optionally, in some embodiments of this application, the thermal management component 13 abuts the first wall 201. This can enhance the thermal management effect of the thermal management component 13 on the first wall 201.

It should be understood that relevant parts in various embodiments of this application can refer to each other, and for brevity, are not reiterated herein.

An embodiment of this application further provides an electric device, the electric device including the battery 10 of the foregoing embodiments. Optionally, the electric device may be a vehicle 1, a ship, or a spacecraft, but this is not limited in the embodiments of this application.

Some embodiments of this application further provide a method for assembling a battery, where the battery 10 includes a box 110, a first component 12, and the battery cell 20 of the foregoing embodiments, where the recess 2012 of the battery cell 20 is configured to accommodate the first component 12, the method including: accommodating the first component 12 in the recess 2012.

Optionally, the method further includes: sleeving the box 110 over the exterior of the first component 12 and the battery cell 20. Optionally, in some embodiments of this application, the first component 12 may first be accommodated in the recess 2012, and then the box 110 may be sleeved over the exterior of the first component 12 and the battery cell 20; alternatively, the first component 12 may first be installed in the box 110, and then the battery cell 20 may be installed inside the box 110, with the first component 12 accommodated in the recess 2012; or the battery cell 20 may first be installed in the box 110, and then the first component 12 may be installed inside the box 110, with the first component 12 accommodated in the recess 2012. In some embodiments of this application, the method may further include assembling two parts of the box 110 to encapsulate the battery cell 20 and the first component 12 within the box, the box 110 being, for example, the box 110 shown in FIG. 3. In other embodiments of this application, the method may further include: sealing the box 110 with a cover to encapsulate the battery cell 20 and the first component 12 within the box.

Here, the first component 12 may be the thermal management component 13 of the foregoing embodiments, the method including: accommodating at least a portion of the thermal management component 13 in the recess 2012.

Optionally, the thermal management component 13 may include a main body portion 131 and a protruding portion 132, the method including: accommodating the protruding portion 132 in the recess 2012.

FIG. 23 is a schematic diagram of a method for assembling a battery cell according to some embodiments of this application.

Some embodiments of this application further provide a method for assembling a battery cell, as shown in FIG. 23, the battery cell 20 including a housing 200, an end cover 206, an electrode assembly 202, and a connecting member 204, where a second wall 217 of the housing 200 is provided with an electrode terminal 203, the connecting member 204 being electrically connected to the electrode terminal 203. The method includes: at an opening of the housing 200, connecting a tab 2021 of the electrode assembly 202 to the connecting member 204 by laser welding, where the tab 2021 faces a first wall 201 of the housing 200, the first wall 201 and the second wall 217 being two intersecting sidewalls of the housing 200; bending the tab 2021 to allow the electrode assembly 202 to enter and be accommodated in the housing 200 through the opening; and closing the opening with the end cover 206. Since the tab 2021 is accommodated in the receiving portion 2011, the space available for welding is relatively narrow, and ultrasonic welding can hardly ensure welding quality and precision; therefore, connecting the tab 2021 to the connecting member 204 by laser welding and then bending the tab 2021 can enhance welding quality and assembly efficiency. Optionally, the connecting member 204 may first be welded to the electrode terminal 203 and then welded to the tab 2021. In this case, the bending of the tab 2021 is achieved by bending the electrode assembly 202 in the direction indicated by the arrow in the figure.

Although this application has been described with reference to preferred embodiments, various improvements can be made thereto, and components therein can be replaced with equivalents without departing from the scope of this application. In particular, as long as no structural conflict exists, the technical features mentioned in the various embodiments can be combined in any manner. This application is not limited to the specific embodiments disclosed herein but includes all technical solutions falling within the scope of the claims.

## Claims

1. A battery cell **characterized in that** the battery cell is configured for use in a battery the battery cell comprising:
a first wall (201), wherein the first wall (201) is provided with a recess (2012) recessed toward the interior of the battery cell the recess (2012) being configured to accommodate a first component (12) of the battery

2. The battery cell according to claim 1, **characterized in that** the recess (2012) extends through the battery cell along a first direction (Y), the first direction (Y) being perpendicular to a thickness direction of the first wall (201).

3. The battery cell according to claim 1 or 2, **characterized in that** a wall adjacent to the first wall (201) and a region of the first wall (201) excluding the recess (2012) form a receiving portion (2011) protruding toward the exterior of the battery cell; and the receiving portion (2011) is configured to accommodate components inside the battery cell

4. The battery cell according to claim 3, **characterized in that** the first wall (201) comprises at least two recesses (2012), the receiving portion (2011) being located between two adjacent recesses (2012) of the at least two recesses (2012).

5. The battery cell according to claim 3 or 4, **characterized in that** a connection between a bottom wall of the recess (2012) and a sidewall of the recess (2012) is provided with a chamfer; and/or
a connection between the sidewall of the recess (2012) and the region of the first wall (201) forming the receiving portion (2011) is provided with a chamfer.

6. The battery cell according to any one of claims 1 to 5, **characterized in that** an angle α formed between the bottom wall of the recess (2012) and the sidewall of the recess (2012) satisfies a value range of: 100° ≤ α ≤ 150°.

7. The battery cell according to any one of claims 3 to 6, **characterized in that** the battery cell comprises:
an electrode assembly (202), wherein the electrode assembly (202) comprises a tab (2021), the tab (2021) being at least partially accommodated in the receiving portion (2011).

8. The battery cell according to claim 7, **characterized in that** the receiving portion (2011) comprises a first receiving portion (2011a) and a second receiving portion (2011b), the electrode assembly (202) comprising a first tab (2021a) located in the first receiving portion (2011a) and a second tab (2021b) located in the second receiving portion (2011b); and the recess (2012) is located between the first receiving portion (2011a) and the second receiving portion (2011b).

9. The battery cell according to claim 7 or 8, **characterized in that** the battery cell further comprises:
a first insulating structure (214), wherein the first insulating structure (214) isolates a first end surface of the electrode assembly (202) provided with the tab (2021) from the recess (2012), the first insulating structure (214) being located in a region of the first end surface excluding the tab (2021).

10. The battery cell according to any one of claims 7 to 9, **characterized in that** the battery cell further comprises an electrode terminal (203), the electrode terminal (203) being configured to be electrically connected to the tab (2021); and
the electrode terminal (203) is provided on a second wall (217) of the battery cell, the second wall (217) being adjacent to the first wall (201); or the electrode terminal (203) is provided on a third wall (218) of the battery cell the third wall (218) being opposite to the first wall (201); or the electrode terminal (203) is provided on the receiving portion (2011).

11. The battery cell according to claim 10, **characterized in that** the battery cell further comprises: a connecting member (204), the connecting member (204) being configured to connect the tab (2021) and the electrode terminal (203); and the connecting member (204) being at least partially accommodated in the receiving portion (2011).

12. The battery cell according to claim 11, **characterized in that** the battery cell further comprises: a second insulating structure (209), the second insulating structure (209) isolating the connecting member (204) from a surface of the receiving portion (2011) opposite to the connecting member (204).

13. The battery cell according to any one of claims 1 to 12, **characterized in that** the battery cell further comprises:
a housing (200), the housing (200) having an opening; and
an end cover (206), the end cover (206) being configured to close the opening;
the first wall (201) being a sidewall of the housing (200) adjacent to the opening; or the first wall (201) being the end cover (206).

14. The battery cell according to claim 13, **characterized in that** the end cover (206) comprises a wall of the battery cell having a largest area.

15. The battery cell according to any one of claims 1 to 14, **characterized in that** the first component (12) comprises a thermal management component (13).

16. A battery comprising:
a first component (12); and
the battery cell according to any one of claims 1 to 13, **characterized in that** the recess (2012) is configured to accommodate the first component (12).

17. The battery according to claim 16, **characterized in that** the first component (12) comprises a thermal management component (13), the thermal management component (13) being at least partially accommodated in the recess (2012).

18. The battery according to claim 17, **characterized in that** a dimension of the thermal management component (13) in a second direction (Z) is less than or equal to a dimension of the recess (2012) in the second direction (Z), the second direction (Z) being a depth direction of the recess (2012).

19. The battery according to claim 17 or 18, **characterized in that** a wall adjacent to the first wall (201) and a region of the first wall (201) excluding the recess (2012) form a receiving portion (2011) protruding toward the exterior of the battery cell the receiving portion (2011) being configured to accommodate a tab (2021) of an electrode assembly (202); and
a surface of the thermal management component (13) away from the recess (2012) is flush with a surface of the receiving portion (2011) away from the tab (2021).

20. The battery according to claim 19, **characterized in that** the thermal management component (13) comprises a main body portion (131) and a protruding portion (132), the protruding portion (132) protruding from a second end surface of the main body portion (131) in a direction away from the second end surface, and at least a portion of the protruding portion (132) being accommodated in the recess (2012).

21. The battery according to claim 20, **characterized in that** a dimension of the protruding portion (132) in the second direction (Z) is greater than or equal to a dimension of the recess (2012) in the second direction (Z), the second direction (Z) being a depth direction of the recess (2012).

22. The battery according to claim 20 or 21, **characterized in that** the thermal management component (13) comprises at least two protruding portions (132), the protruding portions (132) being spaced apart from the receiving portion (2011).

23. The battery according to any one of claims 17 to 22, **characterized in that** the thermal management component (13) abuts the first wall (201).

24. An electric device, comprising:
the battery according to any one of claims 16 to 23, **characterized in that** the battery is configured to provide electrical energy to the electric device.

25. A method for assembling a battery, **characterized in that** the battery comprises:
a box (110) and a first component (12); and
the battery cell according to any one of claims 1 to 15, **characterized in that** a recess (2012) of the battery cell is configured to accommodate the first component (12);
the method comprising: accommodating the first component (12) in the recess (2012).
